# EUROPÄISCHE PATENTANMELDUNG

(11) **EP 2 803 464 A2**
(43) Veröffentlichungstag der Anmeldung: **19.11.2014**
(21) Anmeldenummer: 14450023.8
(22) Anmeldetag: 08.05.2014
(51) Int. Cl.: B29C 45/00, E05B 19/26

(54) **Verfahren zur Herstellung eines Schlüssels sowie eine Vorrichtung zur Durchführung des Verfahrens**

(30) Priorität: 14.05.2013 AT 3972013
(71) Anmelder: EVVA Sicherheitstechnologie GmbH, 1120 Wien (AT)
(72) Erfinder: Davidovac, Kristijan, A-1220 Wien (AT); Amon, Reinhard, A-3722 Straning 38 (AT)
(74) Vertreter: Keschmann, Marc

(57) **Zusammenfassung**

Bei einem Verfahren zur Herstellung eines Schlüssels (1, 6, 10), der zum Betätigen eines Schließzylinders ausgebildet ist und eine Reide (2, 7, 11) und einen Schaft (3, 8, 12) mit einer mechanisch und/oder magnetisch abtastbaren Codierung aufweist, werden der Schaft (3, 8, 12) und die Reide (2, 7, 11) mittels eines Spritzgussverfahrens aus einem Thermoplasten gefertigt.

## Beschreibung

Die Erfindung betrifft ein Verfahren zur Herstellung eines Schlüssels, der zum Betätigen eines Schließzylinders ausgebildet ist und eine Reide und einen Schaft mit einer mechanisch und/oder magnetisch abtastbaren Codierung aufweist.

Die Erfindung betrifft weiters einer Vorrichtung zur Durchführung des eingangs genannten Verfahrens.

Schlüssel, die zum Betätigen eines Schließzylinders ausgebildet sind und eine Reide und einen Schaft mit einer mechanisch und/oder magnetisch abtastbaren Codierung aufweisen, bestehen in der Regel aus Metall. Die Herstellung eines Metallschlüssels ist aufgrund der vielen Verfahrensschritte, die erforderlich sind, um den Schlüssel mit der jeweils individuellen mechanischen und/oder magnetischen Codierung zu versehen, sehr aufwändig. Im Falle eines eine mechanisch abtastbare Codierung aufweisenden Schlüssels geht man in der Regel von einem Rohling aus, der bereits ein Querschnittsprofil aufweist, das der Formgebung des zugehörigen Schlüsselkanals des Schließzylinders angepasst ist. Neben der erwähnten Längsprofilierung weist ein mechanischer Schlüssel an einer oder an zwei gegenüberliegenden Kanten des Schlüsselschafts eine Mehrzahl von aufeinander folgenden Erhebungen und Vertiefungen mit den Erhebungen jeweils zugeordneten Steuerkanten auf, die zum Betätigen von Sperrelementen, wie z.B. Stiftzuhaltungen eines Schießzylinders ausgebildet sind. Diese Erhebungen und Vertiefungen werden am Rohling mittels eines Fräswerkzeugs ausgebildet. In einem nachfolgenden Schritt muss noch die Reide des Schlüssels bearbeitet werden, um Kennzeichnungen, wie beispielsweise Codierungsnummern oder Markenbezeichnungen durch Prägen od. dgl. einzubringen. Schließlich ist eine Nachbearbeitung erforderlich, beispielsweise um scharfe Kanten zu vermeiden.

Obwohl sich Metallschlüssel sehr bewährt haben, weisen sie neben der aufwändigen und kostenintensiven Herstellung eine Reihe weiterer Nachteile auf. Metallschlüssel haben ein hohes Gewicht und können insbesondere im Fall eines Nickel enthaltenden Materials Allergien auslösen. Weiters ist die Profilierung der Schlüssel aufgrund des Herstellungsverfahrens gewissen Einschränkungen unterworfen, sodass die Anzahl der Codierungsmöglichkeiten gering ist. Weiters besteht der Nachteil, dass eine farbige Gestaltung von Metallschlüsseln nur eingeschränkt möglich ist. Die Farbe des Metalls kann kaum beeinflusst werden. Eine Farbgestaltung ist lediglich durch Auftragen eines Lacks möglich, der naturgemäß einem hohen Verschleiß unterworfen ist. Weiters gestaltet es sich bei Metallschlüsseln schwierig, elektronische oder magnetische Codierungselemente zu integrieren. Elektronische Codierungselemente wie beispielweise Mikrochips können daher lediglich in die Reide integriert werden, wenn diese aus einem nichtmetallischen Material ausgebildet ist. In einem solchen Fall können der Metallschaft und die Reide somit nicht aus ein und demselben Material hergestellt werden, was die Herstellung weiter verteuert. Im Falle von magnetischen Codierungselementen können diese gemäß dem Stand der Technik zwar in den metallischen Schlüsselbart eingebettet werden, es besteht jedoch der Nachteil, dass der Metallschaft die magnetischen Feldlinien negativ beeinflussen kann.

Zur Überwindung der oben genannten Nachteile ist bereits vorgeschlagen worden, einen Schlüssel gänzlich oder in Teilbereichen aus einem Kunststoff zu fertigen. Diesbezüglich wird beispielsweise auf die EP 305588 A2 verwiesen. In dieser Schrift wird aber bereits darauf hingewiesen, dass Schlüssel, die aus Kunststoff bestehen, keine ausreichende Torsionssteifigkeit aufweisen. In der genannten Schrift wird daher vorgeschlagen, Versteifüngselemente z.B. aus Metall im Übergangsbereich zwischen der Reide und dem Schlüsselschaft einzubringen. Die Herstellung eines solchen. Schlüssels erfordert daher die Handhabung zweier unterschiedlicher Materialien und ist daher aufwändig.

Die vorliegende Erfindung zielt daher darauf ab, die oben im Zusammenhang mit Metallschlüsseln angeführten Nachteile zu überwinden und die Herstellung zu vereinfachen. Dabei sollen bevorzugt Schlüssel erhalten werden, bei denen keine relevanten Einbußen hinsichtlich der Verschleißfestigkeit und der Torsions- und Biegesteifigkeit in Kauf genommen werden müssen. Insbesondere soll der Schlüssel auch eine Abriebfestigkeit aufweisen, die eine Anzahl von Benutzungszyklen zulässt, sodass der Schlüssel über viele Jahre täglich gebraucht werden kann.

Zur Lösung dieser Aufgabe ist das Verfahren der eingangs genannten Art derart weitergebildet, dass der Schaft und die Reide oder deren Rohlinge mittels eines Spritzgussverfahrens aus einem Thermoplasten gefertigt werden. Durch die Verwendung eines Spritzgussverfahrens kann der Schlüssel in einem einzigen Arbeitsschritt hergestellt werden. Dabei wird bevorzugt so vorgegangen, dass der Schaft und die Reide miteinander einstückig gefertigt werden.

Durch die Verwendung eines Spritzgussverfahrens unterliegt die Formgebung, insbesondere die die mechanische Codierung darstellende Profilierung des Schlüssels wesentlich weniger Einschränkungen als dies bei einem Fräsen von Profilen bei Metallschlüsseln der Fall ist. Insbesondere können beim Spritzgussverfahren ohne weiteres Profilierungen mit Hinterschneidungen ausgebildet werden. Dadurch kann die mechanische Codierungsvielfalt wesentlich gesteigert werden, wodurch die Nachsperrsicherheit erhöht wird.

Bevorzugt ist der Thermoplast aus der Gruppe der Polyimide ausgewählt. Polyimide sind Hochleistungskunststoffe, deren wichtigstes Strukturmerkmal die Imid-Gruppe ist. Zu den Polyimiden zählen beispielsweise Polyetherimide und Polyamidimide, wobei sich in Versuchen gezeigt hat, dass insbesondere Polyetherimide für den Einsatz in der Schlüsselherstellung besonders bevorzugt sind. Polyimide zeichnen sich generell durch eine hohe mechanische Festigkeit, eine hohe chemische Beständigkeit und eine hohe Temperaturfestigkeit aus. Polyetherimide sind im Rahmen der vorliegenden Erfindung insbesondere auch deshalb als bevorzugt zu bezeichnen, weil sie ohne weiteres im Spritzgussverfahren verarbeitet werden können.

Wenn, wie dies einer bevorzugten Weiterbildung entspricht, der Schlüsselschaft und die Reide oder deren Rohling aus demselben Thermoplasten, insbesondere Polyetherimid hergestellt werden, kann der gesamte Schlüssel oder dessen Rohling einstückig und aus einer einzigen Kunststoffkomponente im Spritzgussverfahren hergestellt werden. Wenn verschiedene Teilbereiche des Schlüssels aus unterschiedlichen Thermoplasten bestehen sollen, kann bevorzugt so vorgegangen werden, dass ein Zwei- oder Mehrkomponentenspritzgussverfahren zum Einsatz gelangt. Die Verwendung von zwei oder mehr Kunststoffsorten kann beispielsweise dann von Vorteil sein, wenn die Reide mit einem im Vergleich zu einem Hartkunststoff, insbesondere Polyetherimid, weicheren Material beschichtet werden soll, um die Haptik zu verbessern. Die Verwendung eines Zwei- oder Mehrkomponentenspritzgussverfahrens kann aber auch erforderlich sein, wenn, wie dies bevorzugt vorgesehen ist, eine Teilmenge des Thermoplasten mit einem Füllstoff versetzt wird und zur Ausbildung wenigstens eines Teilbereichs des Schlüsselschafts in die Spritzgussform eingespritzt wird. Der Füllstoff kann bevorzugt ferromagnetisch sein, sodass in dem gennannten wenigstens einen Teilbereich eine magnetische Codierung erfolgen kann. Die magnetische Codierung kann dabei insbesondere dadurch individualisiert werden, dass die magnetischen Eigenschaften des genannten Teilbereichs vom Volumenanteil bzw. der Menge des ferromagnetischen Füllstoffs im Thermoplasten abhängen.

Der Schlüssel muss nicht notwendiger Weise zur Gänze mittels eines Spritzgussverfahrens hergestellt werden. Vielmehr kann auch nur ein Rohling des Schafts, der Reide oder des ganzen Schlüssels spritzgegossen werden. Es kann in diesem Zusammenhang derart vorgegangen werden, dass der Rohling nach dem Spritzgießen aus der Spritzgussform genommen und einem Bearbeitungsschritt unterzogen wird. Der Bearbeitungsschritt kann eine thermische oder mechanische Bearbeitung umfassen. Danach kann der bearbeitete Rohling wieder in die Spritzgussform eingelegt und mittels eines weiteren Spritzgusses fertiggestellt werden. Beim weiteren Spritzgussvorgang kann entweder der gleiche Thermoplast wie beim Spritzgießen des Rohlings zum Einsatz gelangen oder ein anderer Thermoplast. Alternativ kann der Rohling mit Metall beschichtet, insbesondere bedampft werden.

Eine bevorzugte Weiterbildung sieht vor, dass vor dem Spritzgießen in die Kavität wenigstens ein der magnetischen oder elektronischen Codierung dienendes Bauteil eingelegt wird. Das genannte Bauteil wird beim Spritzgießvorgang umspritzt oder in den durch das Spritzgießen hergestellten Schlüsselkörper eingebettet. Bevorzugt ist das der magnetischen oder elektronischen Codierung dienende Bauteil ein Mikrochip. Der Mikrochip kann dabei in besonders bevorzugter Weise als RFID-Transponder ausgebildet sein. Wenn der Mikrochip im Material des Schlüsselschafts eingebettet oder von diesem völlig umschlossen ist, ist eine Ausführung besonders vorteilhaft, bei welcher der Mikrochip passiv arbeitet, d.h. ohne eine eigene Stromquelle. Insbesondere ist in diesem Zusammenhang ein passiver RFID-Transponder bevorzugt.

Alternativ oder zusätzlich zum Mikrochip kann vorgesehen sein, dass das der magnetischen oder elektronischen Codierung dienende Bauteil ein dauermagnetisierbares Material, insbesondere Samarium-Cobalt, umfasst. Ein derartiges Bauteil aus dauermagnetisierbarem Material kommt beispielsweise bei sogenannten Magnetschlössern zum Einsatz, bei denen die Sperrelemente des Schließzylinders Magnetrotoren umfassen, deren Drehstellung durch magnetische Kräfte veränderbar ist, die von dem genannten dauermagnetisierbaren Material, wie beispielsweise Samarium-Cobalteinsätzen herrühren.

Obwohl der bevorzugt eingesetzte Thermoplast aus der Gruppe der Polyimide, insbesondere Polyetherimid, bereits eine hohe Festigkeit sowie eine hohe Schlagzähigkeit aufweist, können die Materialeigenschaften bevorzugt noch dadurch verbessert werden, dass ein faserverstärkter Thermoplast, insbesondere faserverstärktes Polyetherimid verwendet wird, wobei zur Verstärkung bevorzugt Kohle- und/oder Glasfasern eingesetzt werden. Die Faserverstärkung dient insbesondere der Erhöhung der Torsions- und Biegesteifigkeit des Schlüsselkörpers. In diesem Zusammenhang ist bevorzugt vorgesehen, dass der faserverstärkte Thermoplast, insbesondere das faserverstärkte Polyetherimid einen Faseranteil von 5-40, bevorzugt 20-35 Vol.-% aufweist.

Um die festigkeitssteigernde Wirkung der Fasern zu maximieren, sieht eine bevorzugte Weiterbildung vor, dass die Fasern in gleichorientiertem Zustand vorliegen.

Die Wahl des Anspritzpunktes kann die Eigenschaften des Spritzgussteils beeinflussen. Der Anspritzpunkt beeinflusst vor allem bei mit Fasern versetzten Thermoplasten die Orientierung der Fasern und damit auch die Festigkeit des Formteils. Weiters beeinflusst die Wahl des Anspritzpunktes die Entstehung von Bindenähten. Bindenähte entstehen beim Spritzgießen, wenn mehrere Fließfronten aufeinander treffen. Bindenähte führen oft dazu, dass auf der Oberfläche eine Kerbe entsteht und dadurch die Oberflächenqualität verschlechtert wird und dass sich die mechanischen Eigenschaften generell verschlechtern. Aus diesen Gründen ist es vorteilhaft, den Anspritzpunkt so zu platzieren, dass möglichst wenige Bindenähte entstehen. Im Rahmen von Versuchen hat sich herausgestellt, dass besonders gute Ergebnisse erzielt werden, wenn der Anspritzpunkt an der Reide, insbesondere im Bereich der gedachten Verlängerung des Schafts, d.h. an der vom Schaft am weitesten entfernten Stelle der Reide gewählt wird. Dies gewährleistet gleichzeitig die gewünschte Gleichorientierung der Fasern. Eine Optimierung dahingehend, dass der Anteil von unorientierten Fasern bzw. von Faserknäueln minimiert wird, erfolgt bevorzugt durch ein optimiertes Angussverteilersystem, das ein kurz von dem Eintritt des Materials in die Kavität angeordnetes Überlaufdepot aufweist, in dem sich unorientierte Faserknäuel aufnehmen lassen.

Zur Durchführung des erfindungsgemäßen Verfahrens sieht die Erfindung eine Spritzgussvorrichtung vor, umfassend eine wenigstens eine Kavität begrenzende Spritzgussform und wenigstens eine Einspritzdüse zum Einspritzen eines Thermoplasten in die Kavität, wobei die Spritzgussform wenigstens zwei entlang einer Trennebene voneinander trennbare Formhälften aufweist, wobei die Spritzgussform wenigstens zwei quer und/oder parallel zur Trennebene verschiebbare, in die Kavität ragende Schieber umfasst. Die Schieber sind für die Einstellung der schlüsselindividuellen Profilierung des Schlüssels verantwortlich, sodass mit einer Spritzgussform eine Vielzahl unterschiedlich profilierter bzw. codierter Schlüssel hergestellt werden kann, was die Werkzeugkosten wesentlich reduziert. Bevorzugt ist hierbei vorgesehen, dass eine erste Gruppe von Schiebern quer zur Trennebene und eine zweite Gruppe von Schiebern parallel zur Trennebene verschiebbar geführt ist. Auf diese Weise können die unterschiedlichsten Profilierungen erzielt werden, wobei je nach Verschieberichtung quer oder parallel zur Trennebene eine Profilierung der beiden Seitenflächen des Schlüsselschafts bzw. des mit den Stiftzuhaltungen des Schließzylinders zusammenwirkenden Schlüsselbarts gelingt.

Um die Einstellungen von vorgegebenen Verschiebepositionen der Schieber zu ermöglichen, sieht eine bevorzugte Ausführung vor, dass die Schieber mit Rastmitteln zusammenwirken, um die Schieber jeweils in einer ersten Verschiebeposition und in einer zweiten Verschiebeposition und ggf. in weiteren Verschiebepositionen zu verrasten.

Um eine Automatisierung des Codierungsvorganges zu ermöglichen, ist die Ausbildung bevorzugt derart getroffen, dass wenigstens eine mit den Schiebern zusammenwirkende Antriebseinrichtung vorgesehen ist, um die Schieber individuell zu verschieben. Auf diese Weise ist mittels der Antriebseinrichtung somit eine voneinander unabhängige Verschiebung der einzelnen Schieber realisierbar.

Eine vollautomatische Erzeugung von Schlüsseln mit unterschiedlicher Profilierung gelingt bevorzugt dadurch, dass die Antriebseinrichtung mit einer Steuereinheit zusammenwirkt, die einen Speicher für eine Vielzahl von Codierungsalternativen umfasst, wobei jeder Codierungsalternative Verschiebestellungen der einzelnen Schieber zugeordnet sind, wobei die Schieber in Abhängigkeit von der jeweils ausgewählten Codierungsalternative zur Einnahme der zugeordneten Verschiebestellung antreibbar sind.

Die erfindungsgemäße Spritzgussvorrichtung soll insbesondere zur Herstellung von Schlüsselprofilen für die unterschiedlichsten Ausgestaltungen herkömmlicher mechanischer Schließzylindersysteme geeignet sein, wobei sowohl eine Längsprofilierung als auch eine Profilierung des Schlüsselbartes ermöglicht werden soll. Zu diesem Zweck sieht die Erfindung bevorzugt vor, dass die Kavität zur Ausbildung eines Schlüsselprofils mehrere in Längsrichtung verlaufende Nuten aufweist. Außerdem sind die Schieber bevorzugt zur Ausbildung einer Mehrzahl von aufeinanderfolgenden Vertiefungen am Schlüsselschaft angeordnet, die zum Betätigen von Sperrelementen, wie z.B. Stiftzuhaltungen eines Schließzylinders vorgesehen sind.

Die Spritzgussform kann bevorzugt derart weitergebildet sein, dass beim Spritzgießen im gleichen Arbeitsschritt die üblicherweise im Bereich der Reide vorgesehenen Kennzeichnungen, wie z.B. eine Markenbezeichnung oder eine Codierungsidentifikation, ausgeformt werden.

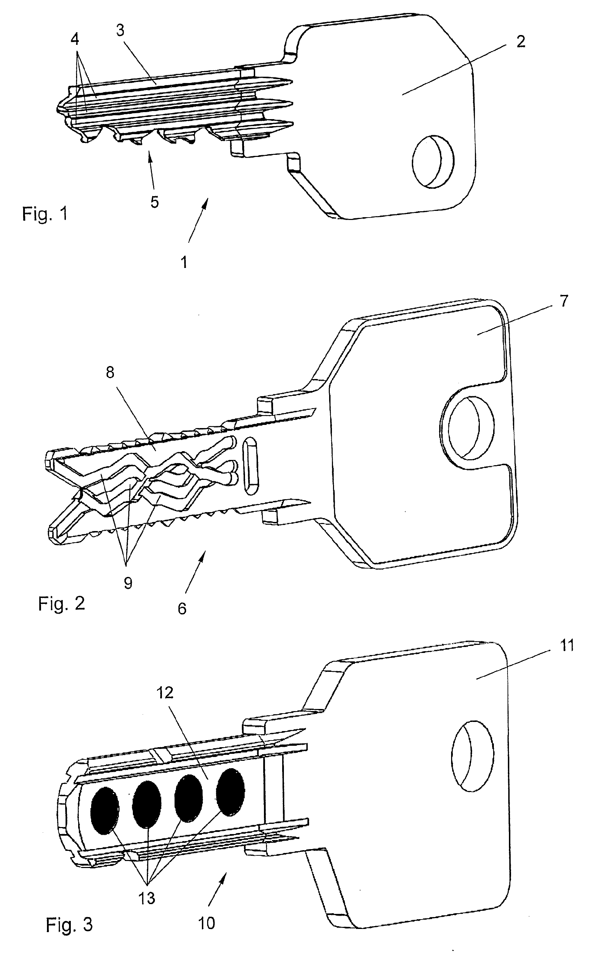

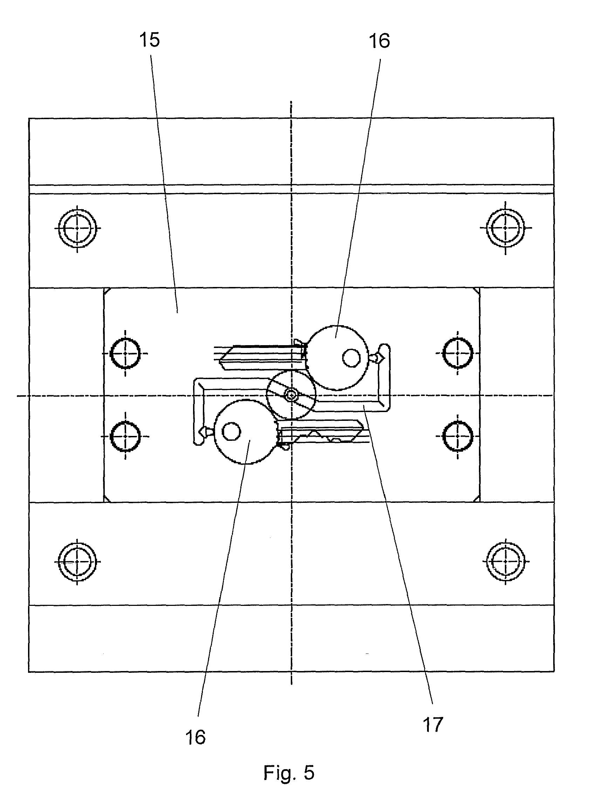

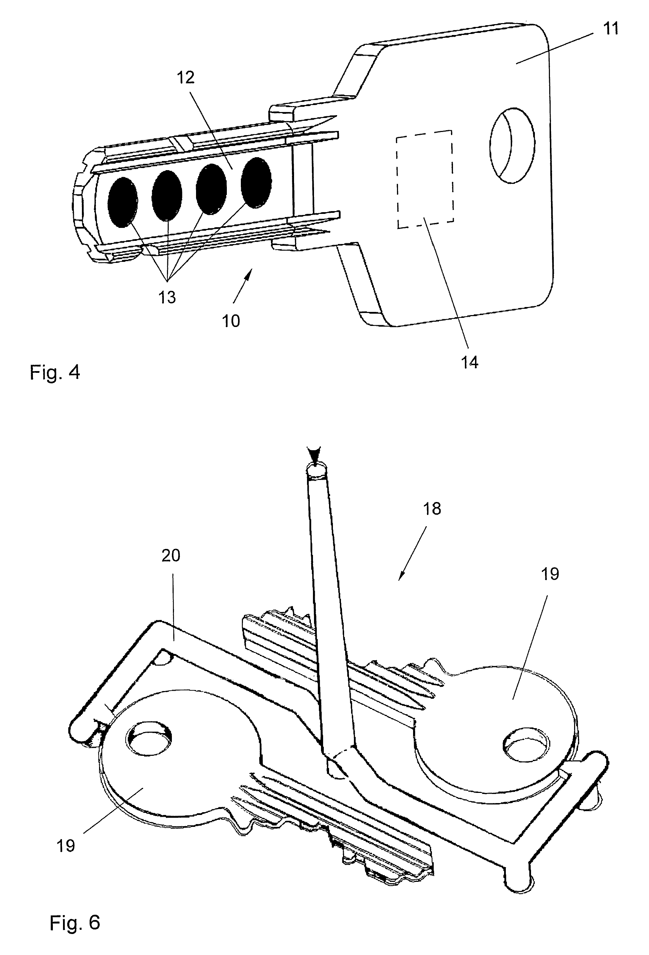

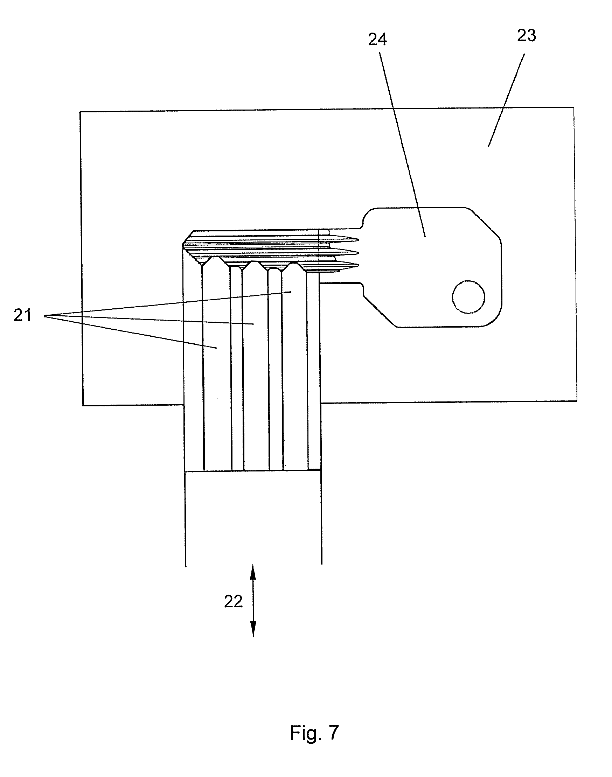

Die Erfindung wird nachfolgend anhand von in der Zeichnung schematisch dargestellten Ausführungsbeispielen näher erläutert. In dieser zeigen Fig.1 einen Schlüssel mit einer mechanisch abtastbaren Profilierung in einer ersten Ausführung, Fig.2 einen Schlüssel mit einer mechanisch abtastbaren Profilierung in einer zweiten Ausführung, Fig.3 einen Schlüssel mit einer magnetisch abtastbaren Codierung, Fig.4 einen Schlüssel gemäß Fig. 3 mit einem in der Schlüsselreide eingeschlossenen Mikrochip, Fig.5 eine Spritzgussform zur Herstellung eines Schlüssels gemäß Fig.1, Fig. 6 ein in der Spritzgussform hergestelltes Spritzgussteil und Fig. 7 ein Spritzgusswerkzeug.

Fig.1 zeigt einen Schlüssel 1 mit einer Reide 2 und einem Schlüsselschaft 3. Der Schlüsselschaft 3 weist eine Mehrzahl von das Querschnittsprofil des Schlüssels 1 bestimmenden Lähgsnuten 4 und einen Schlüsselbart mit einer eine Mehrzahl von Vertiefungen und Erhebungen aufweisenden Profilierung 5 auf. Der in Fig.1 dargestellte Schlüssel ist in einem Stück in einem Spritzgussverfahren hergestellt und besteht zur Gänze aus faserverstärktem Polyetherimid. Die Spritzgussform zur Herstellung des Schlüssels 1 ist in Fig. 5 dargestellt.

Fig.2 zeigt ebenfalls einen Schlüssel 6, der zur Gänze aus faserverstärktem Polyetherimid hergestellt ist und eine Reide 7 und einen Schlüsselschaft 8 mit einer mechanisch abtastbaren Profilierung aufweist. Die Profilierung weist im vorliegenden Fall eine Mehrzahl von an der Seitenfläche des Schafts geformten kurvenförmigen Nuten 9 auf.

Fig.3 zeigt einen Schlüssel mit einer magnetisch abtastbaren Codierung. Der Schlüssel 10 weist wiederum eine Reide 11 und einen Schlüsselschaft 12 auf, wobei der Schlüsselschaft an zwei gegenüberliegenden Seiten eine Mehrzahl von dauermagnetischen Einsätzen 13 trägt, welche die magnetische Codierung tragen. Der Schlüssel 10 besteht mit Ausnahme der Einsätze 13 aus faserverstärktem Polyetherimid. Die Einsätze 13 können auf verschiedene Art und Weise erzeugt werden. Die Einsätze 13 können beispielsweise gesondert hergestellt und dann in Vertiefungen des spritzgegossenen Kunststoffschafts eingesetzt werden. Alternativ können die gesondert hergestellten Einsätze 13 in die Spritzgussform eingelegt und beim Spritzgießen umschlossen oder in das Kunststoffmaterial eingebettet werden. Schließlich ist es auch möglich, den Schlüssel und die Einsätze in einem Zweikomponentenspritzguss herzustellen. Aus der ersten Komponente werden die Reide 11 und der Schlüsselschaft 12 einstückig hergestellt, aus der zweiten, mit ferromagnetischen Partikeln versetzten Komponente werden danach die magnetischen Einsätze spritzgegossen.

Fig.4 zeigt einen Schlüssel 10 gemäß Fig.3, bei dem in der Reide 11 ein Mikrochip 14 angeordnet ist. Der Mikrochip wird dabei bevorzugt vollständig von dem faserverstärkten Polyetherimid umschlossen. Die Herstellung erfolgt so, dass der Mikrochip 14 in die Spritzgussform eingelegt und danach mit Polyetherimid umgossen wird.

In Fig. 5 ist die Spritzgussform 15 eines nicht näher dargestellten Spritzgusswerkzeugs schematisch dargestellt. Die Spritzgussform 15 umfasst zwei Formhälften, die eine Kavität begrenzen. Die Kavität hat die Form der in Fig. 5 mit 16 bezeichneten, gegengleich angeordneten Schlüssel. Die zwei Formhälften können entlang einer in der Zeichnungsebene verlaufenden Trennebene voneinander getrennt werden, um das Innere der Form 15 zwecks Entnahme des spritzgegossenen Schlüssels freizugeben. Fig.5 zeigt die Lage der Formbilder in der Form 15 und den Verlauf des Angusskanales 17.

In Fig.6 ist das in der Spritzgussform 15 hergestellte Spritzgussteil 18 dargestellt, der zwei Schlüssel 19 samt Angusskanal 20 umfasst.

In Fig.7 ist ein Spritzgusswerkzeug 23 mit einer Kavität 24 in einer abgewandelten Ausbildung dargestellt. Um eine Vertiefungen und Erhebungen aufweisende Profilierung 5 (Fig.1) am Schlüsselschaft einstellbar zu erzeugen, ist eine Mehrzahl von Schiebern 21 vorgesehen, die jeweils unabhängig voneinander in Richtung des Doppelpfeils 22 verschieblich gelagert sind. Die Verschiebbarkeit dient der Einstellung der jeweils gewünschten Profilierung.

## Patentansprüche

1. Verfahren zur Herstellung eines Schlüssels, der zum Betätigen eines Schließzylinders ausgebildet ist und eine Reide und einen Schaft mit einer mechanisch und/oder magnetisch abtastbaren Codierung aufweist, **dadurch gekennzeichnet, dass** der Schaft und die Reide mittels eines Spritzgussverfahrens aus einem Thermoplasten gefertigt werden.

2. Verfahren nach Anspruch 1, **dadurch gekennzeichnet, dass** der Schaft und die Reide miteinander einstückig gefertigt werden.

3. Verfahren nach Anspruch 1 oder 2, **dadurch gekennzeichnet, dass** der Thermoplast aus der Gruppe der Polyimide ausgewählt ist.

4. Verfahren nach Anspruch 3, **dadurch gekennzeichnet, dass** als Thermoplast ein Polyetherimid eingesetzt wird.

5. Verfahren nach einem der Ansprüche 1 bis 4, **dadurch gekennzeichnet, dass** ein faserverstärkter Thermoplast, insbesondere faserverstärktes Polyetherimid verwendet wird, wobei zur Verstärkung bevorzugt Kohle- und/oder Glasfasern eingesetzt werden.

6. Verfahren nach Anspruch 5, **dadurch gekennzeichnet, dass** der faserverstärkte Thermoplast, insbesondere das faserverstärkte Polyetherimid einen Faseranteil von 5-40, bevorzugt 20-35 Vol.-% aufweist.

7. Verfahren nach einem der Ansprüche 1 bis 6, **dadurch gekennzeichnet, dass** vor dem Spritzgießen in die Kavität wenigstens ein der magnetischen oder elektronischen Codierung dienendes Bauteil eingelegt wird.

8. Verfahren nach Anspruch 7, **dadurch gekennzeichnet, dass** das der magnetischen oder elektronischen Codierung dienende Bauteil ein Mikrochip ist.

9. Verfahren nach Anspruch 7, **dadurch gekennzeichnet, dass** das der magnetischen oder elektronischen Codierung dienende Bauteil ein dauermagnetisierbares Material, insbesondere Samarium-Cobalt umfasst.

10. Verfahren nach einem der Ansprüche 1 bis 9, **dadurch gekennzeichnet, dass** ein Zwei- oder Mehrkomponentenspritzgussverfahren zum Einsatz gelangt.

11. Verfahren nach Anspruch 10, **dadurch gekennzeichnet, dass** eine Teilmenge des Thermoplasten mit einem Füllstoff versetzt wird und zur Ausbildung wenigstens eines Teilbereichs des Schlüsselschafts in die Spritzgussform eingespritzt wird.

12. Verfahren nach Anspruch 11, **dadurch gekennzeichnet, dass** der Füllstoff ferromagnetisch ist.

13. Spritzgussvorrichtung zur Herstellung von Schlüsseln mit einer mechanisch abtastbaren Codierung nach einem der Ansprüche 1 bis 12 umfassend eine wenigstens eine Kavität begrenzende Spritzgussform und wenigstens eine Einspritzdüse zum Einspritzen eines Thermoplasten in die Kavität, wobei die Spritzgussform wenigstens zwei entlang einer Trennebene voneinander trennbare Formhälften aufweist, **dadurch gekennzeichnet, dass** die Spritzgussform (15) wenigstens zwei quer und/oder parallel zur Trennebene verschiebbare, in die Kavität ragende Schieber (21) umfasst.

14. Spritzgussvorrichtung nach Anspruch 13, **dadurch gekennzeichnet, dass** eine erste Gruppe von Schiebern (21) quer zur Trennebene und eine zweite Gruppe von Schiebern (21) parallel zur Trennebene verschiebbar geführt ist.

15. Spritzgussvorrichtung nach Anspruch 13 oder 14, **dadurch gekennzeichnet, dass** die Schieber (21) mit Rastmitteln zusammenwirken, um die Schieber (21) jeweils in einer ersten Verschiebeposition und in einer zweiten Verschiebeposition und ggf. in weiteren Verschiebepositionen zu verrasten.

16. Spritzgussvorrichtung nach Anspruch 13, 14 oder 15, **dadurch gekennzeichnet, dass** wenigstens eine mit den Schiebern (21) zusammenwirkende Antriebseinrichtung vorgesehen ist, um die Schieber (21) individuell zu verschieben.

17. Spritzgussvorrichtung nach Anspruch 16, **dadurch gekennzeichnet, dass** die Antriebseinrichtung mit einer Steuereinheit zusammenwirkt, die einen Speicher für eine Vielzahl von Codierungsalternativen umfasst, wobei jeder Codierungsalternative Verschiebestellungen der einzelnen Schieber (21) zugeordnet ist, wobei die Schieber (21) in Abhängigkeit von der jeweils ausgewählten Codierungsalternative zur Einnahme der zugeordneten Verschiebestellung antreibbar sind.

18. Spritzgussvorrichtung nach einem der Ansprüche 13 bis 17, **dadurch gekennzeichnet, dass** die Kavität zur Ausbildung eines Schlüsselprofils mehrere in Längsrichtung verlaufende Nuten aufweist.

19. Spritzgussvorrichtung nach einem der Ansprüche 13 bis 18, **dadurch gekennzeichnet, dass** die Schieber (21) zur Ausbildung einer Mehrzahl von aufeinanderfolgenden Vertiefungen am Schlüsselschaft angeordnet sind, die zum Betätigen von Sperrelementen, wie z.B. Stiftzuhaltungen eines Schließzylinders vorgesehen sind.
